# EUROPEAN PATENT APPLICATION

(11) **EP 3 889 121 A1**
(43) Date of publication of application: **06.10.2021**
(21) Application number: 20168079.0
(22) Date of filing: 03.04.2020
(51) Int. Cl.: C04B 26/06, C04B 40/00, C04B 40/02, C04B 40/06, C04B 111/54

(54) **COMPOSITION FOR SYNTHETIC STONE AND STONE MANUFACTURED THEREOF**

(71) Applicant: Perspex International Limited, Darwen BB3 1AT (GB)
(72) Inventor: APSEY, Glenn Christopher, Bowgreave Preston Lancashire PR3 1TD (GB); FISHER, Adam Lee, Whittle-le-Woods Lancashire PR6 7DJ (GB)
(74) Representative: Gernet Althaus IP AG

(57) **Abstract**

A composition for a synthetic stone is disclosed, said composition is based on a component A that comprises an acrylic resin and a component B comprising a filler.

## Description

The invention relates to the field of compositions for synthetic stone and the manufacturing of synthetic stones thereof and said synthetic stone being useful for indoor and also for outdoor applications.

Natural stones, for example marble and granite, have been used as aesthetic and functional products in quite a number of applications such as kitchen worktops and also building façades. However, sources and availability of suitable natural stones are limited and inevitably lead to high costs when using these materials. Thus, in recent years there have been ongoing efforts to substitute natural stone in the aforementioned applications with synthetic stone. These synthetic stones offer a number of advantages over natural stone including reduced costs and improved mechanical properties.

Typically, synthetic stones are manufactured in a moulding process and comprise a combination of a polymeric resin together with a number of natural or artificial agglomerates which can further be combined with colour pigments to achieve the desired aesthetic and functional effects. The use of polyester resin as the polymeric resin of such synthetic stones has become widespread. On one hand because the polyester resins are low in price and on the other hand, they are well known in manufacturing due to well mastered methods of polymerisation within temperature ranges that are necessary to achieve cost effective manufacture of synthetic stone. A significant disadvantage of unsaturated polyester resins, however, is their generally poor resistance to ultraviolet radiation and also to weathering, which strongly limits their use in outdoor applications such as building façades.

This in turn led to an increased interest in and use of acrylic resins as the polymeric resin as they are known to have a good resistance to ultraviolet radiation and also weathering.

Compositions comprising acrylic resins are for instance described in EP 1 878 712, WO 2015 091 318 and also in US 6 387 985. These compositions and the products made thereof, however, do not overcome quite high costs and further property limitations such as crumbling at the edges or discolouration.

WO 2017 153 764 describes another composition using an acrylic resin thus improving weathering resistance and also heat resistance. However, the compositions described suffer from limited processability as do practically all compositions known from the prior art.

Processability of the composition is important as the manufacturing process of synthetic stone may regularly be slowed down or interrupted due to problems with plant equipment caused for example by wear due to the hardness of the utilised quartz fillers. This may lead to the agglomerate mix being slowed down or held on the production line where depending on the duration of the slow down or interruption volatile organic compounds from the resin evaporate. After delays of thirty minutes or more negative effects on the processability of the composition start to become noticeable. Thus, good processability is understood to be the property of the composition to show the lowest possible loss of volatile organic compounds over a prolonged period of time, such as thirty minutes or one hour or even longer. Of course, these delays can reduce the amount of effective resin content and thereby its binding capacity. The manufactured synthetic stone can show defects in its surface quality as a reduced binding consequently leads to an easier removal agglomerates that are located in the surface during grinding and polishing of the synthetic stone. The reduced processability also adversely affects the mechanical stability of the synthetic stone. So far, attempts to overcome limited processability in the event of a slowed down or interrupted manufacturing process include increasing the level of polymeric resin utilised. However, this causes higher costs and potentially also creates additional process problems in terms of levelling and overfilling of moulds used in the manufacturing process.

There is thus an ongoing need for compositions for synthetic stone showing good mechanical properties, resistance to ultraviolet radiation and weatherability and good processability.

The problem is solved by the composition as defined in claim 1. Preferred embodiments are subject to the dependent claims.

A composition according to the present invention comprises two components, component A and component B. Component A comprises an acrylic resin in the amount of 3 to 25 weight-% acrylic resin based on the total weight of the composition. The acrylic resin comprises:
i) methyl methacrylate monomer residues in the range of 2 to 28 weight-% based on the total weight of component A, wherein the methacrylate monomer residues have a molecular weight of greater than 10'000 Da, preferably greater than 15'000 Da, more preferably greater than 20'000 Da, and most preferably greater than 25'000 Da;
ii) at least one mono(alk)acrylate monomer in the range of 60 to 97 weight-% based on the total weight of component A, wherein any mono(alk)acrylate with a boiling point of less than 105°C is no more than 12 weight-% based on the total weight of the mono(alk)acrylate.
iii) a crosslinking agent in the range of 1 to 10 weight-% based on the total weight of component A.

Component B comprises a filler in the range of 75 to 97 weight-% based on the total weight of the composition.

It has been surprisingly found that the processability of the synthetic stone composition can be improved to overcome limitations of the prior art by lowering the methyl methacrylate monomer content together with increasing the total monomer content with a concomitant lowering in the total methyl methacrylate monomer residue levels. Lower losses of volatile organic compounds are achieved together with the attainment of good mechanical properties and enhanced shapeability.

By "higher boiling point mono(alk)acrylate monomer" is meant a monomer that has a single (alk)acrylate group capable of polymerisation and a higher boiling point than methyl methacrylate (MMA) at standard atmospheric pressure, i.e. 1 bar. Component (A)(ii) may be selected from monomers having a higher boiling point than 101°C, such as >102°C, >105°C, >110°C or >130°C, preferably >150°C, at standard atmospheric conditions.

The mono(alk)acrylate is selected from the monomer(s) (C₃-C₁₂)alkyl acrylate and/or (C₂-C₁₂)alkyl(C₁ -C₈alk)acrylate. Preferably, The mono(alk)acrylate is selected from monomer(s) according (C₃-C₁₀)alkyl (C₀-C₆alk)acrylate, more preferably(C₃-C₈)alkyl(C₀-C₄alk)acrylate, most preferably, (C₃-C₆)alkyl(C₀-C₂alk)acrylate. By (Coalk)acrylate is meant an unsubstituted acrylate wherein there is no alkyl substituent on the alpha carbon and wherein (C₅)alkyl or above includes cycloalkyl.

The monomer(s) of mono(alk)acrylate may be selected from one or more of the group consisting of ethyl methacrylate, propyl (meth)acrylate, butyl (meth)acrylate, hexyl (meth)acrylate, 2-ethylhexyl(meth)acrylate, cyclohexyl (meth)acrylate and isobornyl(meth)acrylate including all skeletal isomeric forms such as n-, sec-, tert-, and/or iso- forms. Preferably, the monomer(s) of mono(alk)acrylate is butyl (meth)acrylate, more preferably, butyl methacrylate such as i-butyl methacrylate or n-butyl methacrylate.

Component (A)(ii) may also be formed of two or more higher boiling point mono(alk)acrylate monomers, such as i-butyl methacrylate and n-butyl methacrylate.

The type and amount of fillers used will depend on the desired aesthetic and mechanical properties of the final product. Any filler may be used provided they are compatible with the acrylic resin. Suitably, the filler may be or may comprise natural aggregate. The filler may comprise only one type of material or it may comprise two or more suitable materials.

As used herein, the term "natural aggregate" primarily is understood as crushed or milled natural stone and minerals. One or more natural aggregate may be selected from the group consisting of calcium carbonate, quartz, cristobalite, granite, feldspar, marble, quartzite, dolomite, basalt, and ferrosilicon. Marble, granite, and quartz are particularly preferred, more preferably quartz.

The term "filler" may also be understood to include or be completely made up of other materials, often added polymeric compositions. Such fillers may include one or more of silica (e.g. fumed or milled silica), clay, fly ash, cement, broken ceramics, mica, silicate flakes, broken glass, glass beads, glass spheres, mirror fragments, steel grit, aluminum grit, carbides, plastic beads, pelletised rubber, ground polymer composites, polymer flakes, graphite, fibers, wood chips, sawdust, paper laminates, barium sulfate, aluminum hydroxide, aluminum oxides, aluminum silicates, pigments, colorants, and mixtures thereof.

Preferably, filler is selected from the group consisting of natural aggregate, such as quartz, fumed or milled silica and/or an inorganic pigment, such as titanium dioxide. Suitably, the filler comprises between 0.01 and 5% of pigment by weight of the composition, such as between 0.05 and 3wt%, or 0.1 and 2wt%.

The size of the filler particles may vary depending upon the end use of the material. Also, the size of the filler may depend on the aesthetic required. Plain colours will usually have smaller particles sizes whereas granites will contain a combination of different sizes depending on the effect required. Some stones may also contain large particle mirror glass. In most processes the average size d50 of the filler particles is <50mm, preferably <40mm, more preferably <30mm. Filler may comprise a filler fraction having an average particle size within the range 0.01 mm to 100mm, such as between 0.01 and 5mm, 0.03 and 4mm, or between 0.03 and 3mm. Suitably, these sizes are particularly applicable to the natural aggregate in the filler.

The filler component may be formed of fractions having different average particles sizes. Filler (B) may comprise a fraction having an average particle size of between 0.01 and 0.3mm, such as between 0.1 and 0.3mm; a fraction having an average particle size of between 0.3 and 0.8mm; and a fraction having an average particle size of between 0.8 and 5mm, such as between 0.8 and 3mm, or between 0.8 and 2mm. Methods to determine the particle size are known in the art. Suitable methods include a laser process such as a Sedigraph III 5120 particle size analyser or by sieve sizes.

In addition to the filler fraction sizes above, which may be considered to be the coarse filler fractions, the filler component may comprise a fine filler fraction with an average particle size that is smaller than the average particle size of the coarse filler fraction(s). For example, the average particle size of the fine filler fraction may be <500µm, such as <200µm, or <100µm or <50 µm or <45 µm. Suitably, the fine filler fraction comprises silica, such as milled or fumed silica.

The fine filler fraction can be present in the filler in an amount of between 0 wt-% and 40 wt-% of the filler component, such as between 5 and 35 wt-%, or 10 and 30 wt-%, preferably, 15 and 25 wt-%. The coarse filler fraction may be present in an amount of between 60 and 100% by weight of the filler component, such as 65 and 95 wt-%, or 70 and 90 wt-%, preferably 75 and 85 wt-%.

In a preferred embodiment, the component A further comprises iv) methyl methacrylate monomer in the range of 1 to 12 weight-% based on the total weight of component A.

In another embodiment the component A further comprises other acrylate of vinyl comonomer residues in the range of 0 w-% up to 10 w-%.

The composition may optionally comprise a component C in the form of a coupling agent.

The coupling agent serves to promote adhesion between the filler and the resin. Suitably, the composition comprises between 0.1 wt-% and 5% of a coupling agent by weight of the resin, such as between 0.5 and 3 wt-% or between 0.7 wt-% and 2.5 wt-%, preferably between 0.8 wt-% and 1 .5 wt-%. A suitable coupling agent is for instance a silane coupling agent, such as methacryloylpropyltrimethoxysilane, vinyl trimethoxysilane, vinyl triethoxysilane and 3-mercaptopropyltrimethoxysilane.

Preferably, the component A, the acrylic resin, has a glass transition temperature of at least 40°C.

The component A, the acrylic resin, and the component B, the filler, are generally kept separate until shortly before they are processed. In this respect, a kit of parts for forming synthetic stone is provided, the kit of parts comprising:
- an acrylic resin part comprising an acrylic resin according to acrylic resin A of the present invention, optionally further comprising coupling agent C of the present invention; and
- a filler part comprising a filler according to filler B of the present invention.

The component A, the acrylic resin, is typically a liquid resin able to bind the component B, the filler, in the synthetic stone upon polymerisation.

In a preferred embodiment, the composition or kit of parts further comprises a component D, an initiator system. Preferably, the initiator system is operable to be activated thermally.

Suitably, initiator system, component D, is formed of radical initiators. The radical initiators of system may be one or more initiators selected from the group consisting of a peroxide and/or azo- type initiators. Preferably component D, the initiator system, comprises at least one peroxide-type initiator, suitably as the first initiator type. An optional second initiator type may be an azo initiator. The component D, the initiator system may comprise only one initiator type, for example a peroxide initiator or an azo initiator. Alternatively, the initiator system may comprise two compounds, namely a peroxide initiator and an azo initiator.

Initiator system, component D, may comprise one or more initiators selected from the group consisting of di-(t-butyl-cyclohexyl)peroxydicarbonate, azo-di-isobutyronitrile, dilauroyl peroxide, dibenzoyl peroxide, 2,2'-azo-di(2-methylbutryonitrile) and/or dicetylperoxydicarbonate. Preferably, initiator system is formed of di-(t-butyl-cyclohexyl)peroxydicarbonate as the first initiator and azo-di-isobutyronitrile as the optional second initiator and optionally a third initiator. An optional third initiator may be tert-butyl peroxybenzoate.

The initiator system, component D, may be pre-mixed with acrylic resin, component A and/or the filler, component B. The initiator system, component D, may also be brought together with acrylic resin and filler only shortly before processing.

A method of manufacturing synthetic stone comprises several steps. In step a) component A, the acrylic resin, and component B, the filler are mixed; mixing an acrylic resin according to component A as defined in any of claims 1 to 7, a filler according to component B as defined in any of claims 1 to 7, and optionally a component C, a coupling agent, and further, also optionally, a component D, an initiator system. Preferably the components are mixed until they form a uniform mixture with the resin.

In a step b) the uniform mixture is added to a mould and substantially de-aerating the mixture preferably by applying vacuum, compaction and/or vibration.

In a step c) the mixture is cured by heating, preferably by heating to a temperature between 75°C and 130°C, more preferably between 85°C and 125°C.

In a further optional step, the cured mixture is cut to the desired form and/or polished.

The synthetic stone manufactured by the above described method may be further processed into a shaped product useful for indoor and outdoor applications. The composition for a synthetic stone and the method for manufacturing, both according to the present invention, achieve synthetic stone with an excellent shapeability which can for instance be understood as the ability of the synthetic stone show a high displacement in three-point bending test. Synthetic stone according to the present invention shows at higher temperatures (e.g. at 50°C or above) a displacement in the range several millimetres which increases with higher temperatures. In contrast, synthetic stone known from prior art exhibits only minimal displacement in three-point bending test, said displacement not exceeding one millimetre even at a temperature of 100°C.

### Example 1

10% methyl methacrylate, 51.9% iso-butyl methacrylate, 1% 1,4-butanediol dimethacrylate, 13% hydroxyethyl methacrylate, 24% poly(methyl methacrylate) (Diakon LG156) (all w/w%) and 0.14% of a combination of stabilisers were stirred at 50°C for 2 hours to form a uniform mixture. The stabiliser combination comprises 0.09% 2-(2H-benzotriazol-2-yl)-p-cresol, 0.04% bis(2,2,6,6-tetramethyl-4-piperidyl) sebacate, 0.01% 2,6-di-tert-butyl-4-methylphenol (all w/w%). Further, 1 wt-% 3-methacryloxy-n-propyltrimethoxysilane and 0.15 wt-% azo-di-isobutyronitrile were added to the cooled resin to activate the same.

A quartz mix was then prepared using 10.8 w/w% activated resin together with 1.1 w/w% colouring pigment (Chemours Ti-Pure R960), 30.5 w/w% milled silica (particle diameter < 45 micron), and 57.6 w/w% crystalline quartz (particle diameter between 0.3 - 0.8mm)

The activated resin and the quartz mix were mixed to form a wet sand and then subjected to vibrations of 3500 rpm for 90 seconds under a vacuum of 12mbar. The composition was cured at 115°C for 30 minutes. Subsequently, the slab was cut and polished to produce a tile which was then subjected to mechanical testing. The resulting flexural strength was measured as 65.5 ± 1.8 MPa. The flexural strength measurement was performed in accordance with EN ISO 14617-2.

### Example 2

63.5% n-butyl methacrylate, 1.8% ethylene glycol dimethacrylate, 13.6% hydroxyethyl methacrylate, 21% poly(methyl methacrylate) (Diakon LG156) (all w/w%) and 0.14% of a combination of stabilisers were stirred at 50°C for 2 hours to form a uniform mixture. The stabiliser combination comprises 0.08% 2-(2H-benzotriazol-2-yl)-p-cresol, 0.04% bis(2,2,6,6-tetramethyl-4-piperidyl) sebacate, 0.01% 2,6-di-tert-butyl-4-methylphenol (all w/w%). Then, 1 wt-% 3-methacryloxy-n-propyltrimethoxysilane and 0.15 wt-% azo-di-isobutyronitrile were added to the cooled resin to activate the same.

A quartz mix was then prepared using 10.8 w/w% activated resin together with 1.1 w/w% colouring pigment (Chemours Ti-Pure R960), 30.5 w/w% milled silica (particle diameter < 45 micron), and 57.6 w/w% crystalline quartz (particle diameter between 0.3 - 0.8mm)

The activated resin and the quartz mix were mixed to form a wet sand and then subjected to vibrations of 3500 rpm for 90 seconds under a vacuum of 12mbar. The composition was cured at 115°C for 30 minutes. Subsequently, the slab was cut and polished to produce a tile which was then subjected to mechanical testing. The resulting flexural strength was measured as 54.4 ± 1.3 MPa. The flexural strength measurement was performed in accordance with EN ISO 14617-2.

### Example 3

10% methyl methacrylate, 51.9% n-butyl methacrylate, 1% 1,4-butanediol dimethacrylate, 13% hydroxyethyl methacrylate, 24% poly(methyl methacrylate) (Diakon LG156) (all w/w%) and 0.14% of a combination of stabilisers were stirred at 50°C for 2 hours to form a uniform mixture. The stabiliser combination comprises 0.09% 2-(2H-benzotriazol-2-yl)-p-cresol, 0.04% bis(2,2,6,6-tetramethyl-4-piperidyl) sebacate, and 0.01% 2,6-di-tert-butyl-4-methylphenol (all w/w%). Further, 1 wt-% 3-methacryloxy-n-propyltrimethoxysilane and 0.15 wt-% azo-di-isobutyronitrile were added to the cooled resin to activate the resin.

A quartz mix was then prepared using 10.8 w/w% activated resin together with 1.1 w/w% colouring pigment (Chemours Ti-Pure R960), 30.5 w/w% milled silica (particle diameter < 45 micron), and 57.6 w/w% crystalline quartz (particle diameter between 0.3 - 0.8mm)

The activated resin and the quartz mix were mixed to form a wet sand and then subjected to vibrations of 3500 rpm for 90 seconds under a vacuum of 12mbar. The composition was cured at 115°C for 30 minutes. Then, the slab was cut and polished to produce a tile which was then subjected to mechanical testing. The resulting flexural strength was measured as 61.2 ± 1.4 MPa. The flexural strength measurement was performed in accordance with EN ISO 14617-2.

### Example 4

12% methyl methacrylate, 80.86% hydroxyethyl methacrylate, 2% 1,4-butanediol dimethacrylate, 5% poly(methyl methacrylate) (Diakon LG156) (all w/w%) and 0.14% of a combination of stabilisers were stirred at 50°C for 2 hours to form a uniform mixture. The combination of stabilisers comprises 0.09 w/w% 2-(2H-benzotriazol-2-yl)-p-cresol, 0.04 w/w% Bis(2,2,6,6-tetramethyl-4-piperidyl) sebacate, 0.01 w/w% 2,6-di-tert-butyl-4-methylphenol. To the cooled resin was added 1 wt% 3-methacryloxy-n-propyltrimethoxysilane and 0.15 wt% azo-di-isobutyronitrile to activate the resin.

A quartz mix was then prepared using 10.5 w/w% activated resin together with 1.1 w/w% inorganic colouring pigment (Chemours Ti-Pure R960), 30.6 w/w% milled silica (particle diameter < 45 micron) and 57.8 w/w% crystalline quartz (particle diameter between 0.3 - 0.8mm).

The composition was mixed to form a wet sand then subjected to vibrations of 3500rpm for 60 seconds under a vacuum of 12mbar. The composition was cured at 115°C for 45 minutes. The slab was subsequently cut and polished to produce a tile which was then subjected to mechanical testing. The resulting flexural strength was measured as 59.5 ± 2.2 MPa. The testing of the flexural strength was performed in accordance with EN ISO 14617-2

### Example 5

12% methyl methacrylate, 80.86% ethyl methacrylate, 2% 1,4-butanediol dimethacrylate, 5% poly(methyl methacrylate) (Diakon LG156) (all w/w%) and 0.14% of a combination of stabilisers (0.09 w/w% 2-(2H-benzotriazol-2-yl)-p-cresol , 0.04 w/w% Bis(2,2,6,6-tetramethyl-4-piperidyl) sebacate, 0.01 w/w% 2,6-di-tert-butyl-4-methylphenol) were stirred at 50°C for 2 hours to form a uniform mixture. To the cooled resin was added 1 wt% 3-methacryloxy-n-propyltrimethoxysilane and 0.15 wt% azo-di-isobutyronitrile to activate the resin.

A quartz mix was then prepared using 10.5 w/w% activated resin together with 1.1 w/w% inorganic colouring pigment (Chemours Ti-Pure R960), 30.6 w/w% milled silica (particle diameter <45 micron) and 57.8 w/w% crystalline quartz (particle diameter between 0.3 - 0.8mm).

The composition was mixed to form a wet sand then subjected to vibrations of 3500rpm for 30 seconds under a vacuum of 12mbar. It was cured at 115°C for 45 minutes. Again, the slab was cut and polished to produce a tile which was subjected to mechanical testing. The resulting flexural strength was measured as 59.6 ± 1.2 MPa. Flexural strength measurements were completed in accordance with EN ISO 14617-2.

### Comparative Example 1

44.2% methyl methacrylate, 5.4% iso-butyl methacrylate, 8.8% n-butyl methacrylate, 0.6% ethylene glycol dimethacrylate, 38% poly(methyl methacrylate) (Elvacite 4071) (all w/w%) and 0.14% of a combination of stabilisers were stirred at 50°C for 2 hours to form a uniform mixture. The combination of stabilisers comprises 0.09% 2-(2H-benzotriazol-2-yl)-p-cresol, 0.04% bis(2,2,6,6-tetramethyl-4-piperidyl) sebacate, 0.01% 2,6-di-tert-butyl-4-methylphenol) (all w/w%).

A quartz mix was then prepared following the procedure outlined in Example 1. The resulting flexural strength was measured as 57.0 ± 1.3 MPa. Flexural strength measurements were completed in accordance with EN ISO 14617-2.

### Comparative Example 2

52.8% i-butyl methacrylate, 7.1% 1,4-butanediol dimethacrylate, 7.5% hydroxyethyl methacrylate, 31.5% poly(methyl methacrylate) (Elvacite 4071) (all w/w%) and 0.14% of a combination of stabilisers (0.09 w/w% 2-(2H-benzotriazol-2-yl)-p-cresol , 0.04 w/w% Bis(2,2,6,6-tetramethyl-4-piperidyl) sebacate, 0.1 w/w% 2,6-di-tert-butyl-4-methylphenol) and 1.0 w/w% glycerol triacetate were stirred at 50°C for 2 hours to form a uniform mixture. To the cooled resin was added 1 wt% 3-methacryloxy-n-propyltrimethoxysilane and 0.15 wt% azo-di-isobutyronitrile to activate the resin.

An agglomerated slab was made according the same procedure as described in example 1. The resulting slab had a flexural strength of 45.5 ± 1.0 MPa. Flexural strength measurement was tested in accordance with EN ISO 14617-2.

### Experimental Results

The slab of example 3 was compared with an agglomerated slab made using the method of example 1 and the resin composition described in comparative example 2. The slabs of example 3 and comparative example 2 were cut into tiles consisting of a cross-section of 25mm x 13mm (± 1%). The tiles were then heated to different temperatures and their displacement distances before breakage was compared with a three-point bending test using a gap of 100mm. The results are shown in table 1 below:

**Table 1**

| Temperature | **20°C** | **65°C** | **100°C** |
|---|---|---|---|
| **Example 3** | 0.5mm | 5.3mm | 12.0mm |
| **Comparative Example 2** | 0.3mm | 0.6mm | 0.8 mm |

Despite there being the expected higher internal stresses caused by relatively greater polymerisation shrinkage the displacement distance measured is more for Example 3 in relation to Comparative Example 2. This is of particular utility for heat shaping slabs produced using Example 3 at relatively cool temperatures. For example, the displacement distance of Example 3 is 15 times more at 100°C than for Comparative Example 2. Even at 65°C the displacement distance of Example 3 is over 6 times more than that for Comparative Example 4 at 100°C. This allows for higher bending of slabs at comparative temperatures and even at lower temperatures such as 65°C where handling is safer, less energy demanding and allows for a greater production throughput.

To simulate and compare VOC (volatile organic compounds) emissions a resin and a quartz mix as described in examples 1 and 2 was mixed and left for 1 hour and the weight loss monitored. As a control a standard unsaturated polyester resin (Synthopan 140-40) was used. For the resin control the formulation of comparative example 1 was used and compared with example 1 and 2. The results are shown in table 2 below:

**Table 2**

| **Sample** | **Total weight loss (w/w%)** |
|---|---|
| Polyester Control | 0.18% |
| Comparative Example 1 | 0.55% |
| Comparative Example 2 | 0.04% |
| Example 1 | 0.23% |
| Example 2 | 0.15% |

## Claims

1. Composition for a synthetic stone comprising
a component A: 3 to 25 weight-% acrylic resin based on the total weight of the composition, the acrylic resin comprising
i) methyl methacrylate monomer residues in the range of 2 to 28 weight-% based on the total weight of component A, wherein the methacrylate monomer residues have a molecular weight of greater than 10'000 Da;
ii) at least one mono(alk)acrylate monomer in the range of 60 to 97 weight-% based on the total weight of component A, wherein any mono(alk)acrylate with a boiling point of less than 105°C is no more than 12 weight-% based on the total weight of the mono(alk)acrylate.
iii) a crosslinking agent in the range of 1 to 10 weight-% based on the total weight of component A;
a component B: filler in the range of 75 to 97 weight-% based on the total weight of the composition.

2. Composition according to claim 1, wherein component A further comprises iv) methyl methacrylate monomer in the range of 1 to 12 weight-%.

3. Composition according to claim 1 or 2, wherein the component A further comprises other acrylate or vinyl comonomer residues in the range of 0 to 10 weight-%.

4. Composition according to claim 1 to 3, wherein the composition further comprises a component C in the form of a coupling agent.

5. Composition according to any of claims 1 to 4, wherein the component A, the acrylic resin as defined in claim 1 has glass transition temperature Tg of at least 40°C.

6. A kit of parts for forming synthetic stone, the kit of parts comprising:
a component A part as defined in claim 1, and a component B part as defined in claim 1.

7. A composition or kit of parts according to any of the preceding claims, further comprising a component D: an initiator system.

8. A method of manufacturing synthetic stone comprising the following steps:
a) mixing an acrylic resin according to component A as defined in any of claims 1 to 7, a filler according to component B as defined in any of claims 1 to 7, and optionally a coupling agent according to component C as defined in any of claims 4 to 7 and optionally an initiator system according to component D as defined in any of claim 7, preferably mixing until the components form a uniform mixture with the resin;
b) adding the mixture to a mold and substantially de-aerating the mixture, preferably with the application of vacuum, compaction and/or vibration;
c) curing the mixture by heating, preferably by heating to a temperature of between 75°C and 130°C, preferably between 85°C and 125°C;

9. Method according to claim 8, wherein the cured mixture is in a further step d) polished.

10. Synthetic stone manufactured by the method according to claim 8 or 9.
